# EUROPEAN PATENT SPECIFICATION

(11) **EP 0 512 602 B1**
(45) Date of publication and mention of the grant of the patent: **04.10.1995**
(21) Application number: 92201152.3
(22) Date of filing: 24.04.1992
(51) Int. Cl.: A01D 75/18, A01B 61/02, A01B 73/06

(54) **Mowing machine**
Mähmaschine
Faucheuse

(30) Priority: 06.05.1991 NL 9100774
(43) Date of publication of application: 11.11.1992
(73) Proprietor: Greenland Geldrop B.V., NL-5667 KP Geldrop (NL)
(72) Inventor: Meijering, Hendrikus, NL-5591 JA Heeze (NL); v.d.Walle, Jacobus Izaak,, NL-5674 PT Nuenen (NL)
(74) Representative: Vollebregt, Cornelis Jacobus, Ir.

(56) References cited:
- EP-A- 0 022 283
- DE-A- 2 210 421
- DE-A- 3 641 546
- US-A- 3 110 146
- US-A- 3 949 539

## Description

The invention relates to a mowing machine provided with a frame with a coupling member to be coupled to a tractor or the like, with a connecting piece which is pivotable with respect to said coupling member about an upwardly extending pivot pin located near one end of said connecting piece, as well as with a frame beam carrying a plurality of mowing means, which is rotatable with respect to the connecting piece about an upwardly extending pivot pin located near the end of the connecting piece remote from the end of the connecting piece adjoining the coupling member, whilst means are provided that do not allow the frame beam to pivot about a pivot pin before the force exerted on the frame beam exceeds a predetermined value in such a manner that when a predetermined force on the frame beam and/or the connecting piece is exceeded a pivotal motion occurs between the coupling member and the connecting piece and/or between the connecting piece and the frame beam.

Such mowing machines (See e.g. EP-A-0022283) are generally provided with a mechanical locking mechanism comprising a spring-loaded locking pin or the like, whereby said locking pin, when a force exerted on the frame beam exceeds a predetermined value, can move out against the spring force of the spring so as to enable a pivotal motion of the frame beam carrying the mowing means opposite to the direction of movement during operation.

Such mechanical locking means are exposed to rusting and fouling, however, which will affect the intended operation of the locking means.

The object of the invention is to obtain a mowing machine of the above kind, wherein the drawbacks of the known constructions can be avoided and an effective moving out of the frame beam carrying the mowing means during operation can be ensured at all times when the forces exerted on said frame beam or on the connecting piece connecting the frame beam to the coupling member, as the case may be, exceed a certain value.

According to the invention this can be achieved in that said means which do not allow pivoting are formed by a hydraulic setting cylinder provided between the coupling member and the connecting piece and a hydraulic setting cylinder provided between the connecting piece and the frame beam, said setting cylinders being under pressure during normal operation and being incorporated in a hydraulic circuit and further means are provided for controlling the setting cylinders in order to bring the mowing machine from an operative position into a transport position wherein the frame beam has been placed behind the coupling member and vice versa by pivoting the connecting piece with respect to the coupling member by means of the setting cylinder provided between the coupling member and the connecting piece and by pivoting the frame beam with respect to the connecting piece by means of the setting cylinder provided between the frame beam and the connecting piece.

Since hydraulic setting cylinders are used the construction will be highly insensitive to rusting and/or fouling, so that even after prolonged use of the mowing machine the frame beam carrying the mowing means will still move out at the intended force, whereby the connecting piece and/of the frame beam may slightly pivot backwards when the force exerted on the connecting piece and/of the frame beam exceeds a predetermined value, which is already sufficient in many cases in order to keep the forces exerted on the carrying part and/or the coupling member within allowable limits, whilst generally the frame beam will not pivot further backwards before a large force is exerted on the frame beam.

A further advantage of the construction according to the invention is that, after the mowing machine has possibly been lifted from the ground, the coupling member and the frame beam can be pivoted back to the position suitable for operation by means of the hydraulic setting cylinders, without the tractor driver having to leave his position on the tractor, whilst the setting cylinders are also used to shift the mowing machine from an operating position into a transport position, and conversely.

It is noted that from US-A-3949539 there is known a mower including a vertical mast which can be pivotally mounted on a tractor for rotation about a vertical axis. On the tractor there has been pivotally mounted a hydraulic setting cylinder which can be pivotally connected to the vertical mast. If a cutter assembly of the mower strikes an stationary object the setting cylinder on the tractor permits pivoting of the complete mower with respect to the tractor. In US-A-3949539 there can not be found any indication with respect to a transport position of the mower with respect to the tractor.

The invention will be explained in more detail hereafter with reference to an embodiment of the construction according to the invention illustrated in the accompanying figures.

Figure 1 is a diagrammatic plan view of a mowing machine according to the invention, wherein the full lines illustrate the position suitable for operation and the dotted lines indicate a transport position and a position in which the mowing machine is partially pivoted backwards.

Figure 2 diagrammatically shows the arrangement of the hydraulic cylinders that form part of the mowing machine according to the invention.

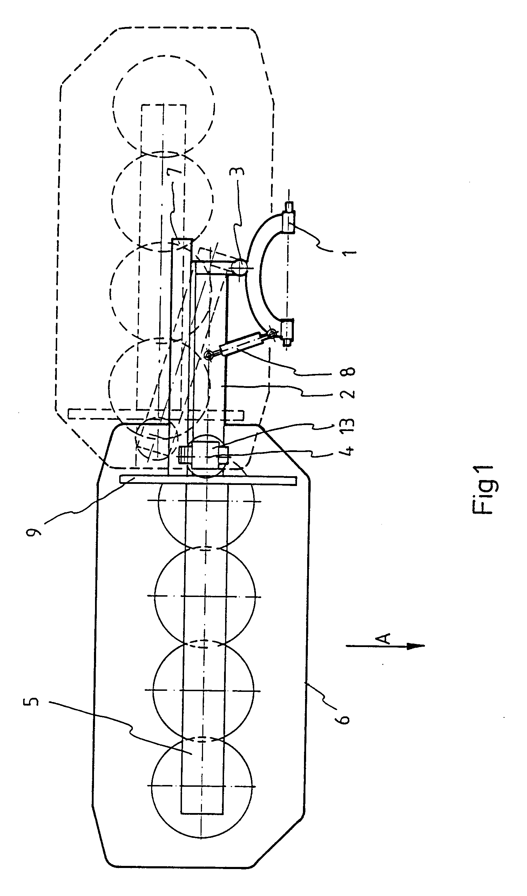

As is diagrammatically shown in Figure 1 the mowing machine comprises a coupling member 1, which is to be coupled to an agricultural implement or the like, said coupling member in the illustrated embodiment being constructed so as to be attached to a three-point hitch of a tractor or the like.

One end of a connecting piece 2 is coupled to said coupling member 1 in such a manner, that said connecting piece is pivotable with respect to the coupling member 1 about a pivot pin 3 extending at least substantially vertically during normal operation.

A frame beam 5 is attached to the end of the connecting piece 2 remote from the pivot pin 3, by means of a pivot pin 4 extending parallel to the pivot pin 3. The frame beam 5 for example supports, in a manner known per se, a plurality of mowing means or mowing drums arranged in side-by-side relationship in a row, which are rotatable about upwardly extending axes of rotation and which are arranged under a protecting plate 6 secured to the frame beam 5, when seen in Figure 1. Said mowing means can be driven from the power take-off shaft of the tractor, via driving means located in a casing 7 extending parallel to the connecting piece or frame beam 2. The construction of such a mowing machine is quite common and need not be further explained or illustrated, therefore.

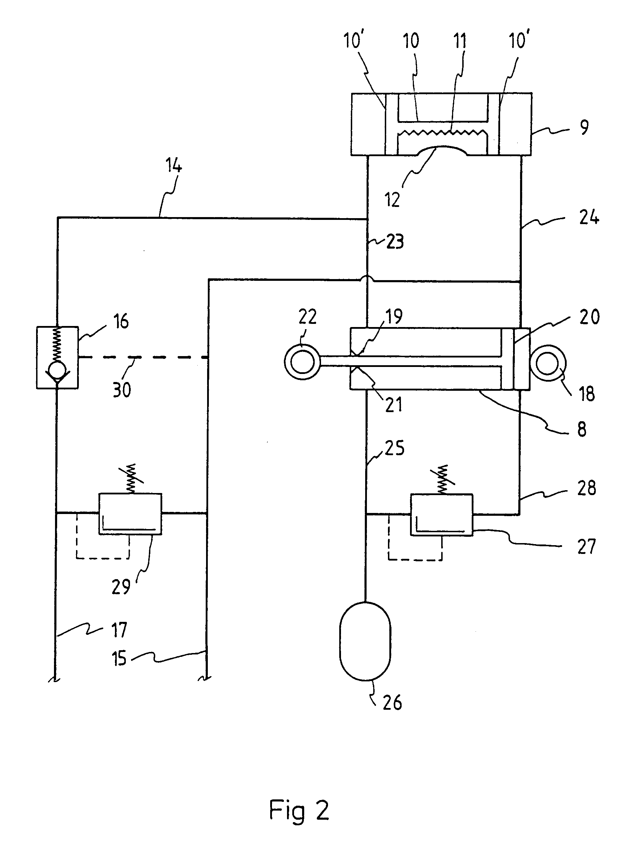

A hydraulic setting cylinder 8 is provided between the coupling member 1 and the connecting piece 2, spaced from the pivot pin 3 by some distance. Furthermore a hydraulic setting cylinder 9 is secured to the frame beam 5. As is illustrated in Figure 2 a piston rod 10 is accommodated in the setting cylinder 9, said piston rod at both ends being provided with sealing rings 10' co-operating with the inner wall of the cylinder 9. A central portion of the piston rod 10 forms a rack 11, whilst near said rack 11 a hole 12 is provided in the wall of the cylinder 9. The part of the rack 11 located near the hole 12 is in engagement with a gear (not shown), which is provided in a gear box 13 secured to the connecting piece 2. Said gear co-operating with the rack 11 is arranged in such a manner that the central axis of said gear coincides with the central axis of the pivot pin 4, whilst the gear has a fixed position with respect to the connecting piece 2.

Lines 14 and 15 respectively are connected to the ends of the setting cylinder 9.

Said line 14 is in communication with a line 17 via a non-return valve mechanism 16, which line 17 can be coupled to the hydraulic circuit of a vehicle, such as a tractor, propelling the mowing machine during operation.

As is furthermore shown in Figure 1, the setting cylinder 8 is provided with an attaching eye 18, by means of which the setting cylinder can be attached to the coupling member 1 or the connecting piece 2.

A piston rod 19 located inside the setting cylinder 8 is at one end provided with a piston 20 secured to said piston rod 19. The end of the piston rod 19 remote from the piston 20 is passed through a stuffing box 21, whilst at its end projecting from the setting cylinder 8 said piston rod is provided with an attaching eye 22, for attachment to the connecting piece 2 or the coupling member 1.

The setting cylinder 8 is illustrated in the position which it will at least substantially occupy during normal operation of the mowing machine, i.e. with the piston rod 19 and the piston 20 attached thereto moved into the setting cylinder 8 as far as possible.

The end of the setting cylinder 8 located near the stuffing box 21 is connected to the line 14 via a line 23. The line 15 is connected to the interior of the setting cylinder 8, via a line 24, in a point located at the side of the piston 20 remote from the piston rod 19. Furthermore the free end of the line 15 may also be connected to the hydraulic circuit of a tractor or the like vehicle propelling the mowing machine during operation.

At one end located near the stuffing box 21 the interior of the setting cylinder 8 is furthermore in communication with a connector 25, via which the interior of the setting cylinder 8 is in communication with an accumulator 26, in which a pressure of e.g. 100 - 120 bar prevails during normal operation. Furthermore an adjustable pressure relief valve 27 is connected to the connector 25, which pressure relief valve shuts off the connection between the connector 25 and one end of a line 28 during normal operation. The end of the line 28 remote from the connecting piece 25 is in turn in communication with the interior of the setting cylinder 8, at a point located at the side of the piston 20 remote from the piston rod 19, near the same end of the setting cylinder 8 as to which the line 24 is connected.

The pressure relief valve 27 opens at a pressure of e.g. ± 180 bar. Another valve mechanism 29 is provided between the lines 17 and 15, via which fluid can be passed from the line 17 to the line 15 and which allows fluid to flow back into the line 15 when the pressure in the line 17 exceeds a pressure of e.g. 120 bar.

Furthermore a line 30 is provided between the valve mechanism 16 and the line 15, whose purpose will be described in more detail hereafter.

During normal operation, when both the connecting piece 2 and the frame beam 5 carrying the mowing means extend transversely to the intended direction of movement according to the arrow A, the piston rods 10 and 19 are located inside the setting cylinders 8 and 9 respectively, in the position shown in Figure 2. In the interior of the setting cylinder 8 as well as in the interior of the left-hand part, when seen in Figure 2, of the setting cylinder 9, via the lines 23 and 14, a pressure corresponding with the pressure in the accumulator 26 will prevail, i.e. a pressure of e.g. 100 - 120 bar.

When, for example, the forces exerted on the frame beam and/or the connecting piece 2 via the mowing means exceed a predetermined value, the pressure in the setting cylinder 8 may become higher than the pressure prevailing in the accumulator 26, as a result of which the setting cylinder 8 will move out, whilst squeezing fluid from the setting cylinder to the accumulator. It will be apparent that consequently the connecting piece 2 and the frame beam 5 carried by the connecting piece can pivot backwards about the shaft 3, opposite the direction of movement. When the forces exerted on the frame beam 5 or the frame beam 2, as the case may be, decrease again the setting cylinder 8 can return to its original position again, because the pressurized fluid flows back from the accumulator 26 into the setting cylinder 8.

When the force exerted on the frame beam 5 and/or the frame beam 2 further increases, however, it is possible that at a given moment the pressure in the interior of the setting cylinders 8 and 9 exceeds the pressure at which the pressure relief valve 27 opens. In that case the fluid can escape from the left-hand part of the setting cylinder 9 via the lines 14 and 23, the interior of the setting cylinder 8, the open valve 27, the line 28, the line 24 and the line 15, in order to flow back into the right-hand part, when seen in Figure 2, of the setting cylinder 9 via the line 15.

In that case the piston rod 10 and the rack 11 integral therewith will move towards the left, when seen in Figure 2. It will be apparent, that the rack 11 will also move with respect to the gear fixed to the connecting piece 2 and being accommodated in the gear box 13 thereby, all this in such a manner that the frame beam 5 will pivot backwards about the pivot pin 14 with respect to the connecting piece 2, in clockwise direction, when seen in Figure 1.

After the obstacle that caused the allowable force exerted on the frame beam 5 and/or the connecting piece 2 to be exceeded has been removed and/or the mowing machine has been lifted by means of the three-point hitch of the vehicle propelling the mowing machine, the machine may be returned to the position suitable for operation. For this purpose pressurized oil may be supplied, by operating a suitable valve provided on the vehicle in question, to the line 17 of the hydraulic circuit on the mowing machine illustrated in Figure 2. Said pressurized oil will be supplied, via the valve 16 and the lines 14 and 23, to the left-hand ends, when seen in Figure 2, of the setting cylinders 9 and 8, as a result of which the piston rods 10 and 19 will be moved towards the right again, when seen in Figure 2, to the positions illustrated in Figure 2. The fluid present in the right-hand portions of the cylinders 8 and 9 in question can flow back to the hydraulic circuit of the tractor via the line 15.

The valve 27 will close automatically and the pressure in the accumulator 26 will return to the desired value of 100 - 120 bar, which is ensured by the setting of the valve 29, which will discharge fluid supplied via the line 17 to the line 15 when the desired pressure in the accumulator 26 is reached.

The above-described setting cylinders 8 and 9 may also be used in order to put the mowing machine in its transport position, in which, as indicated in Figure 1, the frame beam 5 carrying the mowing means is pivoted clockwise through ± 180° with respect to the connecting piece 2, from the normal operating position illustrated in full lines to the transport position illustrated in dotted lines, in which the frame beam 5 carring the mowing means is located at least substantially entirely behind the tractor or the like, when seen in the intended direction of movement.

In order to put the mowing machine in its transport position pressurized oil is supplied to the line 15 by suitably controlling a valve, which forms part of the hydraulic circuit of the tractor or the like. Said pressurized oil is therefore supplied to the right-hand ends, when seen in Figure 2, of the setting cylinders 8 and 9, as a result of which the piston rods 19 and 10 will be moved towards the left, when seen in Figure 2. Consequently the connecting piece 2 will be pivoted clockwise, when seen in Figure 1, about the pivot pin 3, whilst furthermore the frame beam 5 will be pivoted through ± 180° with respect to the connecting piece 2, when seen in Figure 1, about the pivot pin 4. The oil which is squeezed out of the left-hand ends of the setting cylinders 9 and 8, when seen in Figure 2, can flow back to the hydraulic circuit of the tractor via the valve mechanism 16, which is opened by the pressure in the line 30, through the lines 14, 23 and 17.

When the pressure in the line 15 exceeds a predetermined value, oil can escape from the line 15 to the line 17 via the valve mechanism 29, and flow back from said line 17 to the hydraulic circuit of the tractor.

In order to return the mowing machine from the transport position to the position suitable for operation pressurized oil may again be supplied to the line 17, as described above, as a result of which the piston rods 10 and 19 will return to the position shown in Figure 2.

## Claims

1. A mowing machine provided with a frame with a coupling member (1) to be coupled to a tractor or the like, with a connecting piece (2) which is pivotable with respect to said coupling member (1) about an upwardly extending pivot pin (3) located near one end of said connecting piece (2), as well as with a frame beam (5) carrying a plurality of mowing means, which is rotatable with respect to the connecting piece (2) about an upwardly extending pivot pin (4) located near the end of the connecting piece (2) remote from the end of the connecting piece (2) adjoining the coupling member (1), whilst means are provided that do not allow the frame beam (5) to pivot about a pivot pin before the force exerted on the frame beam (5) exceeds a predetermined value, in such a manner that when a predetermined force on the frame beam (5) and/or the connecting piece (2) is exceeded, a pivotal motion occurs between the coupling member (1) and the connecting piece (2) and /or between the connecting piece (2) and the frame beam (5), characterized in that said means which do not allow pivoting are formed by a hydraulic setting cylinder (8) provided between the coupling member (1) and the connecting piece (2) and a hydraulic setting cylinder (9) provided between the connecting piece (2) and the frame beam (5), said setting cylinders (8, 9) being under pressure during normal operation and being incorporated in a hydraulic circuit and further means are provided for controlling the setting cylinders in order to bring the mowing machine from an operative position into a transport position wherein the frame beam (5) has been placed behind the coupling member and vice versa by pivoting the connecting piece (2) with respect to the coupling member (1) by means of the setting cylinder (8) provided between the coupling member (1) and the connecting piece (2) and by pivoting the frame beam (5) with respect to the connecting piece (2) by means of the setting cylinder (9) provided between the frame beam (5) and the connecting piece (2).

2. A mowing machine according to claim 1, characterized in that the ends of the setting cylinders (8, 9), towards which the piston rods (10, 19) or pistons (10', 20) located in the setting cylinders in question move when the connecting piece (2) and/or the frame beam (5) are moved from their normal operating position, are interconnected by means of a line (23, 25) and are furthermore connected to an accumulator (26), in which a predetermined pressure is maintained during operation.

3. A mowing machine according to claim 2, characterized in that the two other ends of the setting cylinders (8, 9) are likewise interconnected (24), whilst between the two ends of one of the setting cylinders (8) a bypass (28) is provided, in which a pressure relief valve (27) is provided, which, when a predetermined pressure is exceeded near the end of the setting cylinder (8) in question, towards which a piston (20) located in the setting cylinder moves when the connecting piece (2) and/or the frame beam (5) are pivoted from the operating position, places the two ends of the setting cylinder (8) in question in open communication with each other.

4. A mowing machine according to any one of the preceding claims, characterized in that the lines (23, 24, 25) connected to the ends of the setting cylinders (8, 9) may be connected to the hydraulic circuit of a tractor or the like propelling the mowing machine during operation.

5. A mowing machine according to claim 4, characterized in that a valve mechanism (16) is provided in the line (14, 23) which is connected to the ends of the two setting cylinders (8, 9) towards which the pistons (10', 20) or piston rods (10, 19) located in the cylinders (8, 9) in question move when the connecting piece (2) and/or the frame beam (5) are moved from their normal operating position, which valve mechanism (16) only allows fluid to pass from the hydraulic circuit of the tractor in the direction of the setting cylinders (8, 9).

6. A mowing machine according to any one of the preceding claims, characterized in that a piston rod (10) is accommodated in the setting cylinder (9) which is provided between the frame beam (5) and the connecting piece (2) and is mounted on said frame beam (5), said piston rod (10) being connected to a rack (11), which is in engagement with a gear fixed to the connecting piece (2), the central axis of said gear coinciding with the pivot pin (4) about with the frame beam (5) can pivot with respect to the connecting piece (2).

## Patentansprüche

1. Mähmaschine, die mit einem Rahmen mit einem Kopplungselement (1) versehen ist, das an einen Traktor oder dergleichen angekoppelt wird, mit einem Verbindungsteil (2), das in bezug auf das Kopplungselement (1) um einen sich nach oben erstreckenden Schwenkzapfen (3), der sich in der Nähe eines Endes des verbindungsteils (2) befindet, schwenkbar ist, sowie mit einem Rahmenträger (5), der eine Vielzahl von Mäheinrichtungen trägt und in bezug auf das Verbindungsteil (2) um einen sich nach oben erstreckenden Schwenkzapfen (4) drehbar ist, der sich in der Nähe des Endes des Verbindungsteils (2) befindet, das von dem Ende des Verbindungsteils (2), das an das Kopplungselement (1) angrenzt, entfernt ist, wobei eine Einrichtung vorhanden ist, die es nicht zuläßt, daß sich der Rahmenträger (5) um einen Schwenkzapfen dreht, bevor die Kraft, die auf den Rahmenträger (5) ausgeübt wird, einen vorgegebenen Wert überschreitet, so daß es, wenn eine vorgegebene Kraft auf den Rahmenträger (5) und/oder das Verbindungsteil (2) überschritten wird, zu einer Schwenkbewegung zwischen dem Kopplungselement (1) und dem Verbindungsteil (2) und/oder zwischen dem Verbindungsteil (2) und dem Rahmenträger (5) kommt, **dadurch gekennzeichnet**, daß die Einrichtung, die die Drehung verhindert, durch einen hydraulischen Einstellzylinder (8), der zwischen dem Kopplungselement (1) und dem Verbindungsteil (2) vorhanden ist, und einen hydraulischen Einstellzylinder (9), der zwischen dem Verbindungsteil (2) und dem Rahmenträger (5) vorhanden ist, gebildet wird, wobei die Einstellzylinder (8,9) während der normalen Funktion unter Druck stehen und in einen Hydraulikkreislauf integriert sind, und des weiteren Einrichtungen vorhanden sind, die die Einstellzylinder so steuern, daß die Mähmaschine aus einer Funktionsstellung in eine Transportstellung gebracht wird, in der der Rahmenträger (5) hinter dem Kopplungselement positioniert worden ist und umgekehrt, indem das Verbindungsteil (2) in bezug auf das Kopplungselement (1) mittels des Einstellzylinders (8), der zwischen dem Kopplungselement (1) und dem Verbindungsteil (2) vorhanden ist, geschwenkt wird, und indem der Rahmenträger (5) in bezug auf das Verbindungsteil (2) mittels des Einstellzylinders (9), der zwischen dem Rahmenträger (5) und dem Verbindungsteil (2) vorhanden ist, geschwenkt wird.

2. Mähmaschine nach Anspruch 1, **dadurch gekennzeichnet**, daß die Enden der Einstellzylinder (8,9), auf die sich die Kolbenstangen (10,19) oder Kolben (10',20), die sich in den betreffenden Einstellzylindern befinden, zubewegen, wenn das Verbindungsteil (2) und/oder der Rahmenträger (5) aus ihrer normalen Funktionsstellung bewegt werden, mittels einer Leitung (23,25) miteinander verbunden sind, und des weiteren mit einem Speicher (26) verbunden sind, in dem in Funktion ein vorgegebener Druck aufrechterhalten wird.

3. Mähmaschine nach Anspruch 2, **dadurch gekennzeichnet**, daß die beiden anderen Enden der Einstellzylinder (8,9) gleichfalls miteinander verbunden sind (24), wobei zwischen den beiden Enden eines der Einstellzylinder (8) eine Überbrückung (28) vorhanden ist, in der ein Druckentlastungsventil (27) vorhanden ist, das, wenn ein vorgegebener Druck in der Nähe des Endes des betreffenden Einstellzylinders (8), auf den sich ein Kolben (20) zubewegt, der sich in dem Einstellzylinder befindet, wenn das Verbindungsteil (2) und/oder der Rahmenträger (5) aus der Funktionsstellung geschwenkt werden, überschritten wird, die beiden Enden des betreffenden Einstellzylinders (8) in offene Verbindung miteinander bringt.

4. Mähmaschine nach einem der vorangehenden Ansprüche, **dadurch gekennzeichnet**, daß die Leitungen (23,24,25), die mit den Enden der Einstellzylinder (8,9) verbunden sind, an den Hydraulikkreislauf eines Traktors oder dergleichen angeschlossen werden können, der die Mähmaschine in Funktion antreibt.

5. Mähmaschine nach Anspruch 4, **dadurch gekennzeichnet**, daß ein Ventilmechanismus (16) in der Leitung (14,23) vorhanden ist, die mit den Enden der zwei Einstellzylinder (8,9) verbunden ist, auf die sich die Kolben (10',20) oder Kolbenstangen (10,19), die sich in den betreffenden Zylindern (8,9) befinden, zubewegen, wenn das Verbindungsteil (2) und/oder der Rahmenträger (5) aus ihrer normalen Funktionsstellung bewegt werden, wobei der Ventilmechanismus (16) das Strömen von Fluid aus dem Hydraulikkreislauf des Traktors nur in der Richtung der Einstellzylinder (8,9) ermöglicht.

6. Mähmaschine nach einem der vorangehenden Ansprüche, **dadurch gekennzeichnet**, daß eine Kolbenstange (10) in dem Einstellzylinder (9) aufgenommen ist, der zwischen dem Rahmenträger (5) und dem Verbindungsteil (2) vorhanden ist und an dem Rahmenträger (5) angebracht ist, wobei die Kolbenstange (10) mit einer Zahnstange (11) verbunden ist, die mit einem Zahnrad in Eingriff ist, das an dem Verbindungsteil (2) befestigt ist, wobei die Mittelachse des Zahnrades mit dem Schwenkzapfen (4) zusammenfällt, um den der Rahmenträger (5) in bezug auf das Verbindungsteil (2) geschwenkt werden kann.

## Revendications

1. Faucheuse comprenant un châssis ayant un organe d'attelage (1) destiné à être couplé à un tracteur ou analogue, avec une pièce (2) de raccordement qui peut pivoter par rapport à l'organe d'attelage (1) autour d'une broche (3) formant un pivot qui dépasse vers le haut, placée près d'une première extrémité de la pièce de raccordement (2), ainsi qu'une poutre (5) de châssis portant plusieurs dispositifs de fauchage, pouvant tourner par rapport à la pièce de raccordement (2) autour d'une broche (4) formant un pivot dépassant vers le haut, placée près de l'extrémité de la pièce de raccordement (2) qui est distante de l'extrémité de la pièce de raccordement (2) qui est adjacente à l'organe d'attelage (1), alors qu'un dispositif est réalisé de manière qu'il ne permette pas le pivotement de la poutre (5) du châssis autour d'une broche formant un pivot avant que la force appliquée sur la poutre (5) dépasse une valeur prédéterminée, d'une manière telle que, lorsqu'une force prédéterminée appliquée à la poutre (5) du châssis et/ou à la pièce de raccordement (2) est dépassée, un mouvement de pivotement se produit entre l'organe d'attelage (1) et la pièce de raccordement (2) et/ou entre la pièce de raccordement (2) et la poutre (5) du châssis, caractérisée en ce que le dispositif qui ne permet pas le pivotement est formé par un vérin hydraulique (8) de réglage placé entre l'organe d'attelage (1) et la pièce de raccordement (2) et un vérin hydraulique (9) de réglage placé entre la pièce de raccordement (2) et la poutre (5) du châssis, les vérins de réglage (8, 9) étant sous pression lors du fonctionnement normal et étant incorporés à un circuit hydraulique, et un dispositif supplémentaire est destiné à commander les vérins de réglage de manière qu'ils fassent passer la faucheuse d'une position de fonctionnement à une position de transport telle que la poutre (5) du châssis a été placée derrière l'organe d'attelage et inversement, par pivotement de la pièce de raccordement (2) par rapport à l'organe d'attelage (1) à l'aide du vérin de réglage (8) placé entre l'organe d'attelage (1) et la pièce de raccordement (2) et par pivotement de la poutre (5) du châssis par rapport à la pièce de raccordement (2) à l'aide du vérin de réglage (9) placé entre la poutre (5) du châssis et la pièce de raccordement (2).

2. Faucheuse selon la revendication 1, caractérisée en ce que les extrémités des vérins de réglage (8, 9), vers lesquelles les tiges (10, 19) des pistons ou les pistons (10', 20) placés dans les vérins de réglage concernés se déplacent lorsque la pièce de raccordement (2) et/ou la poutre (5) du châssis sont déplacées de leur position normale de fonctionnement, sont interconnectées par une conduite (23, 25) et sont en outre connectées à un accumulateur (26) dans lequel une pression prédéterminée est maintenue pendant le fonctionnement.

3. Faucheuse selon la revendication 2, caractérisée en ce que les deux autres extrémités des vérins de réglage (8, 9) sont interconnectées de manière analogue (24), alors que, entre les deux extrémités de l'un des vérins de réglage (8), une dérivation (28) est incorporée et comporte une soupape de décharge de pression (27) qui, lorsqu'une pression prédéterminée est dépassée près de l'extrémité du vérin de réglage concerné (8), vers laquelle un piston (20) placé dans le vérin de réglage se déplace lorsque la pièce de raccordement (2) et/ou la poutre (5) du châssis pivotent depuis la position de fonctionnement, place les deux extrémités du vérin de réglage concerné (8) en communication libre.

4. Faucheuse selon l'une quelconque des revendications précédente, caractérisée en ce que les conduites (23, 24, 25) raccordées aux extrémités des vérins de réglage (8, 9) peuvent être connectées au circuit hydraulique d'un tracteur ou analogue qui déplace la faucheuse pendant son fonctionnement.

5. Faucheuse selon la revendication 4, caractérisée en ce qu'un mécanisme (16) à soupape est placé dans la conduite (14, 23) qui est raccordée aux extrémités des deux vérins de réglage (8, 9) vers lesquelles les pistons (10', 20) ou les tiges de piston (10, 19) placés dans les vérins (8, 9) concernés se déplacent lorsque la pièce de raccordement (2) et/ou la poutre (5) du châssis se déplacent depuis leur position normale de fonctionnement, ce mécanisme à soupape (16) permettant uniquement la circulation du fluide du circuit hydraulique du tracteur vers les vérins de réglage (8, 9).

6. Faucheuse selon l'une quelconque des revendications précédentes, caractérisée en ce qu'une tige (10) de piston est logée dans le vérin de réglage (9) qui est placé entre la poutre (5) du châssis et la pièce de raccordement (2) et est montée sur la poutre (5) du châssis, la tige de piston (10) étant raccordée à une crémaillère (11) qui est en prise avec un pignon fixé à la pièce de raccordement (2), l'axe central du pignon coïncidant avec la broche (4) de pivotement autour de laquelle la poutre (5) du châssis peut pivoter par rapport à la pièce de raccordement (2).
